# EUROPEAN PATENT APPLICATION

(11) **EP 3 145 150 A1**
(43) Date of publication of application: **22.03.2017**
(21) Application number: 15185556.6
(22) Date of filing: 16.09.2015
(51) Int. Cl.: H04L 29/06

(54) **CYBER DEFENCE AND NETWORK TRAFFIC MANAGEMENT USING VIRTUALIZED EMULATION OF NETWORK RESOURCES**

(71) Applicant: MasterCard International Incorporated, Purchase, NY 10577 (US)
(72) Inventor: BLYTHE, Simon, CB7 4AZ Cambridgeshire (GB)
(74) Representative: Richardson, Mark Jonathan

(57) **Abstract**

A virtual resource module (24) for emulating a target computer resource (12) in the event of a cyber-attack, the virtual resource module comprising; an input for receiving target computer resource configuration data from a computer security protection module (22) providing cyber defence capabilities to the computer resource (12); a processor arranged to generate a virtual target to substantially mimic the target computer resource on the basis of the received configuration data; an output arranged to output data to an attacker computer entity (14); wherein the input is arranged to receive a redirected cyber-attack originating from the attacker computer entity, the attack being redirected from the computer security protection module (22); and the processor is arranged to generate responses to the cyber-attack, the responses being sent to the attacker computer entity from the output.

## Description

### Field of Invention

The present invention relates to a computer security system. In particular, the present invention relates to a computer and computer network security system for blocking and managing cyber-attacks. The invention extends to a method of operating a computer security system.

### Background of Invention

The present invention relates to the field of cyber security. Cyber-security is the process of applying measures to protect the security of data on computer networks and other computing devices (such as computers, smart devices [such as smartphones] and tablet computing devices). Cyber-security also relates to the protection of computing assets such as computers, servers, buildings, networks etc. as well as data from various vulnerabilities that an attacker (a "hacker") might exploit. Vulnerabilities may be exploited by a number of different threats which include, but are not limited to: denial-of-service attacks, spoofing, eavesdropping, computer viruses, man-in-the-middle attacks.

Advanced persistent threats relate to stealthy and/or continuous hacking attacks that are orchestrated, often by humans, against specific target entities. Computer systems that store financial data such as credit card numbers and bank account information are often the subject of cyber-attacks. Existing defence methodologies in the financial field include the payment card industry - data security standard (or PCI-DSS). Computer security is also critical in a number of other industries such as vehicles, aviation, governments etc.

### Summary of Invention

According to a first aspect of the present invention there is provided a virtual resource module for emulating a target computer resource in the event of a cyber-attack, the virtual resource module comprising; an input for receiving target computer resource configuration data from a computer security protection module providing cyber defence capabilities to the computer resource; a processor arranged to generate a virtual target to substantially mimic the target computer resource on the basis of the received configuration data; an output arranged to output data to an attacker computer entity wherein the input is arranged to receive a redirected cyber-attack originating from the attacker computer entity, the attack being redirected from the computer security protection module; and the processor is arranged to generate responses to the cyber-attack, the responses being sent to the attacker computer entity from the output.

The first aspect of the present invention provides a virtual resource module that operates to "draw the fire" of attacking computer entities by generating a virtual target that substantially mimics a target computer resource.

Optionally, the processor is arranged to store event logs relating to cyber-attack for subsequent analysis.

Optionally, the processor is arranged to store event logs in a data store associated with the virtual resource module.

Optionally, the processor is arranged to supply video footage representing a physical location from the output to the attacker computer entity. The virtual resource module may either comprise a video generation device or be in communication with a video generation device that is capable of supplying video footage.

Optionally, the processor is arranged to output the video footage from the output to the attacker computer entity in response to a request for footage from the attacker computer entity.

Optionally, the processor is arranged to identify further known attacker computer entities and to redirect the incoming cyber-attack received at the input to a known attacker computer entity via the output.

Optionally, the processor is arranged to supply an Internet Protocol (IP) address to the virtual target that is substantially the same as the target computing device.

Optionally, the processor is arranged to generate a plurality of virtual targets and to populate the internet with the plurality of virtual targets in advance of potential cyber-attacks.

According to a first example useful for understanding the present invention there is provided a computer security protection module arranged to provide cyber defence capabilities to a target computer resource, the target computer resource being a potential target of a cyber-attack from an attacker computer entity, the protection module comprising: a first communications interface arranged to interface with a communications network, the attacker computer entity being remotely located from the computer resource via the communications network; a second communications interface arranged to interface with the target computer resource such that the protection module is located in a communications path between the communications network and the target computer resource; a processor arranged to inspect communications traffic between the communications network and the target computer resource; wherein, the processor is arranged to forward trusted communications traffic received at the first communications interface to the target computer resource via the second communications interface and to forward communications traffic received at the first communications interface that is not trusted to a virtual target, the virtual target being arranged to be a substantial replica of the target computer resource.

The first example useful for understanding the present invention provides a protection module that is arranged to intercept and monitor incoming communications traffic for a computer resource that is potentially the target of a cyber-attack from an attacker computer entity. Communications traffic that is trusted is forwarded on to the computer resource (the "target computer resource") and communications traffic that is not trusted is redirected to a virtual target that substantially replicates the target computer resource.

Optionally, the processor is arranged to forward communications traffic that is not trusted to the virtual target via the first communications interface.

Optionally, the processor is arranged to run penetration testing of the target computer resource. Conveniently the computer security protection module may be arranged to run penetration testing and network profiling activities on the target computer resource. These may be scheduled to run at times of least impact to the target computer resource.

Optionally, the target computer resource comprises a local network and a plurality of devices connected to the local network. The target computer resource may comprise a single computer device in communication with the communications network. Alternatively, the target computer resource may comprise a local area network with a plurality of devices (computers, laptops, printers etc.) connected to the local network.

Optionally, the processor is arranged to map the architecture of the target computer resource, the map of the architecture of the target computer resource comprising configuration data relating to the target computer resource. The protection module may profile the target computer resource (map the architecture of the target resource) and may determine the configuration of each device associated with the target computer resource (the configuration data).

Optionally, the processor is arranged to output the map of the architecture of the target computer resource via the first communications interface to a virtual resource module in order that the virtual resource module can construct a substantial replica of the target computer resource.

Optionally, the processor is arranged to output the map of the architecture of the target computer resource via the first communications interface to an emulation module, the emulation module being arranged to emulate the target computer resource on a virtual machine.

Optionally, the processor is arranged to store the map of the architecture of the target computer resource.

Optionally, the processor is arranged to periodically map the architecture of the target computer resource and compare to a previously stored map of the architecture of the target computer resource. The protection module (via the processor) may conveniently compare network profiles of the target computer resource taken at different times to determine changes to the network profile.

Optionally, the processor is arranged to output a notification message in the event of a change to the architecture of the target computer resource that does not conform to a stored security policy. The target computer resource may define a computer security policy that governs how its users interact with the computer resource (e.g. the policy may govern the downloading of data/programs, installing devices etc.). The processor may be arranged to check the security policy to determine whether any changes to the architecture of the computer resource or configuration of the computer resource is in conformity with the policy. Any unauthorized changes may be notified by means of a notification message.

Optionally, the processor is arranged, in the event that a cyber-attack from an attacker computer entity is detected, to block the first communications interface.

Optionally, the processor is arranged, in the event that a cyber-attack from an attacker computer entity is detected, to block the second communications interface.

Optionally, the processor is arranged to continue forwarding communications traffic from the attacker computer entity to the virtual target while the second communications interface is blocked.

Optionally, the module is arranged to receive computer resource updates for the target computer resource and to apply updates to the computer resource.

According to a second example useful for understanding the present invention there is provided an emulation module arranged to emulate a target computer resource in order to run mock cyber-attacks against an emulated target computer resource, the emulation module comprising: an input for receiving target computer resource configuration data from a computer security protection module providing cyber defence capabilities to the target computer resource; a processor arranged to emulate a representation of the target computer resource and to run mock cyber-attacks against the emulated target computer resource; an output arranged to output target computer resource updates for the target computer resource in dependence on the outcome of the mock cyber-attacks against the emulated target computer resource.

Optionally, the processing means comprises a plurality of virtual machines.

Optionally, the input is arranged to receive further computer resource configuration data from the target computer resource, the processing means being arranged to compare the configuration data received from the protection module and the target computer resource and identify any differences.

According to a second aspect of the present invention there is provided a computer security system comprising: a protection module arranged to provide cyber defence capabilities to a target computer resource, the target computer resource being a potential target of a cyber-attack from an attacker computer entity, the protection module comprising: a first communications interface arranged to interface with a communications network, the attacker computer entity being remotely located from the computer resource via the communications network; a second communications interface arranged to interface with the target computer resource such that the protection module is located in a communications path between the communications network and the target computer resource; a processor arranged to inspect communications traffic between the communications network and the target computer resource; wherein, the processor is arranged to forward trusted communications traffic received at the first communications interface to the target computer resource via the second communications interface and to forward communications traffic received at the first communications interface that is not trusted to a virtual target, the virtual target being arranged to be a substantial replica of the target computer resource; a virtual resource module according to the first aspect of the present invention; and an emulation module arranged to emulate a target computer resource in order to run mock cyber-attacks against an emulated target computer resource, the emulation module comprising: an input for receiving target computer resource configuration data from a computer security protection module providing cyber defence capabilities to the target computer resource; a processor arranged to emulate a representation of the target computer resource and to run mock cyber-attacks against the emulated target computer resource; an output arranged to output target computer resource updates for the target computer resource in dependence on the outcome of the mock cyber-attacks against the emulated target computer resource.

Optionally, the modules are in communication with each other via a communications network.

According to a third aspect of the present invention there is provided a method of operating a virtual resource module for emulating a target computer resource in the event of a cyber-attack from an attacker computer entity, the method of operating the virtual resource module comprising; receiving, at an input, target computer resource configuration data from a computer security protection module providing cyber defence capabilities to the computer resource; generating, at a processor, a virtual target to substantially mimic the target computer resource on the basis of the received configuration data; receiving, at the input, a redirected cyber-attack originating from the attacker computer entity, the attack being redirected from the computer security protection module; generating, at the processor, responses to the cyber-attack, outputting, from an output, the responses to the attacker computer entity.

According to a third example useful for understanding the present invention there is provided a method of operating a computer security protection module arranged to provide cyber defence capabilities to a target computer resource, the target computer resource being a potential target of a cyber-attack from an attacker computer entity, the method comprising: interfacing via a first communications interface with a communications network, the attacker computer entity being remotely located from the computer resource via the communications network; interfacing via a second communications interface with the target computer resource such that the protection module is located in a communications path between the communications network and the target computer resource; inspecting, using a processor, communications traffic between the communications network and the target computer resource; forwarding trusted communications traffic received at the first communications interface to the target computer resource via the second communications interface and forwarding communications traffic received at the first communications interface that is not trusted to a virtual target, the virtual target being arranged to be a substantial replica of the target computer resource.

According to a fourth example useful for understanding the present invention there is provided a method of operating an emulation module arranged to emulate a target computer resource in order to run mock cyber-attacks against an emulated target computer resource, the method of operating comprising: receiving, at an input, target computer resource configuration data from a computer security protection module providing cyber defence capabilities to the target computer resource; emulating, at a processor, a representation of the target computer resource and to run mock cyber-attacks against the emulated target computer resource; outputting, from an output, target computer resource updates for the target computer resource in dependence on the outcome of the mock cyber-attacks against the emulated target computer resource.

The invention extends to a carrier medium for carrying a computer readable code for controlling a computing device to carry out the method of the third aspect of the invention. Furthermore, a carrier medium may carry a computer readable code for controlling a computing device to carry out the method of the third and fourth examples useful for understanding the invention.

The invention extends to a non-transitory computer-readable storage medium storing executable computer program instructions implementing the third aspect of the invention. Furthermore, a non-transitory computer-readable storage medium may store executable computer program instructions implementing the third and fourth examples useful for understanding the invention.

### Brief Description of Figures

Embodiments of the invention, and examples useful for understanding the invention, will now be described, by way of example, with reference to the accompanying Figures, of which:
Figure 1 shows a typical cyber-security arrangement;
Figure 2 shows a computer network security system in accordance with embodiments of the present invention;
Figure 3 shows the protection module, according to an example useful for understanding the present invention, of Figure 2 in further detail;
Figure 4 shows a virtual resource module in accordance with embodiments of the present invention;
Figure 5 shows an emulation module in accordance with examples useful for understanding the present invention;
Figure 6 is a flow chart showing a method of operating a computer security protection module in accordance with examples useful for understanding the present invention;
Figure 7 is a flow chart showing a method of operating a virtual resource module for emulating a target computer resource in the event of a cyber-attack from an attacker computer entity in accordance with embodiments of the present invention;
Figure 8 is a flow chart showing a method of operating an emulation module arranged to emulate a target computer resource in order to run mock cyber-attacks against an emulated target computer resource in accordance with examples useful for understanding the present invention;
Figure 9 shows a flow chart of the actions taken by the protection module during a cyber-attack;
Figure 10 shows a flow chart of the preparedness capabilities deployed by the protection module of Figure 2;
Figure 11 shows a mode of operation of the virtual resource entity of Figure 2 in accordance with embodiments of the present invention.

### Description of Specific Embodiments

Specific embodiments and examples useful for understanding the invention will be described below with reference to the Figures.

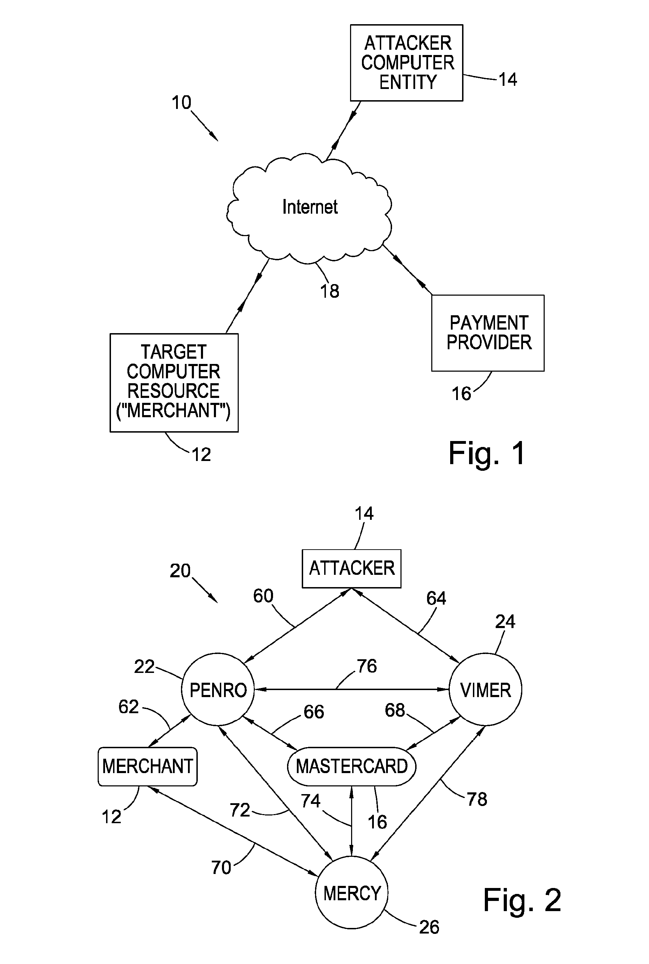

Atypical cyber-security arrangement 10 is shown in Figure 1.

It is noted that Figure 1 and the network security system described below in relation to Figure 2 are shown within the context of a network comprising a merchant and payment processing provider (the payment processing provider being identified as "MasterCard" in Figure 2). It is however to be appreciated that the components of a network security system in accordance with embodiments of the present invention may be deployed in any computer system that has access to the Internet and therefore is potentially susceptible to a cyber-attack.

In alternative configurations the network security system described below may be deployed between a computer network and a communications network or between an individual computer and a communications network. The communications network may, for example, be the Internet, a telecommunications network or any other communications network over which data may be transmitted and received and via which third parties may attempt to gain access to the computer network/computer in order to carry out a cyber-attack.

Figure 1 shows a computer resource 12 that may be subject to a cyber-attack (this computer resource is referred to as the "target computer resource" below). Also shown in Figure 1 is an attacker computer entity 14. The attacker computer entity may comprise a single computer device that attempts to connect to the target computer resource or may comprise a plurality of devices (potentially distributed devices) that may combine together to mount a cyber-attack on the target computer resource. A payment provider 16 is also shown in Figure 1.

As shown in Figure 1 the target computer resource, attacker computer entity and payment provider are each in communication with each other via a communications network 18, such as the Internet.

An overview of a computer network security system 20 in accordance with an embodiment of the present invention is shown in Figure 2. The target computer resource 12 is labeled as "Merchant" in Figure 2 and may in the particular configuration of Figure 2 comprise a number of computer devices (e.g. point-of-sale terminals, merchant server devices, printer and scanner devices and a local area network).

It is noted that for ease of reference, the Internet element 18 depicted in Figure 1 is not shown in Figure 2. However, it is to be appreciated that each of the devices shown in Figure 2 may actually be remotely located from one another and be in communication with one another via a communications network such as the Internet. In alternative configurations some or all of the computer network security components described below may be located locally to the target computer resource or may actually be integrated with the target computer resource.

The computer network security system 20 in accordance with an embodiment of the present invention comprises three components: a protection module 22 (it is noted that the protection module is labeled as "Penro" in Figure 2), a virtual resource module 24 (it is noted that the virtual resource module is labeled as "Vimer" in Figure 2) and an emulation module 26 (it is noted that the emulation module is labeled as "Mercy" in Figure 2).

It is noted that in the following description the network security system 20 comprises all three components (22, 24, 26). However, it is to be appreciated that each component may be deployed individually to provide elements of the overall cyber security defence capabilities described below.

The protection module 22 may comprise a software application or a hardware device. In the configuration shown in Figure 2 the protection module 22 comprises a hardware device located at the target computer resource's location. In a particular configuration the protection module 22 may either be part of a router device or may take the place of a traditional router device at the target computer resource's location.

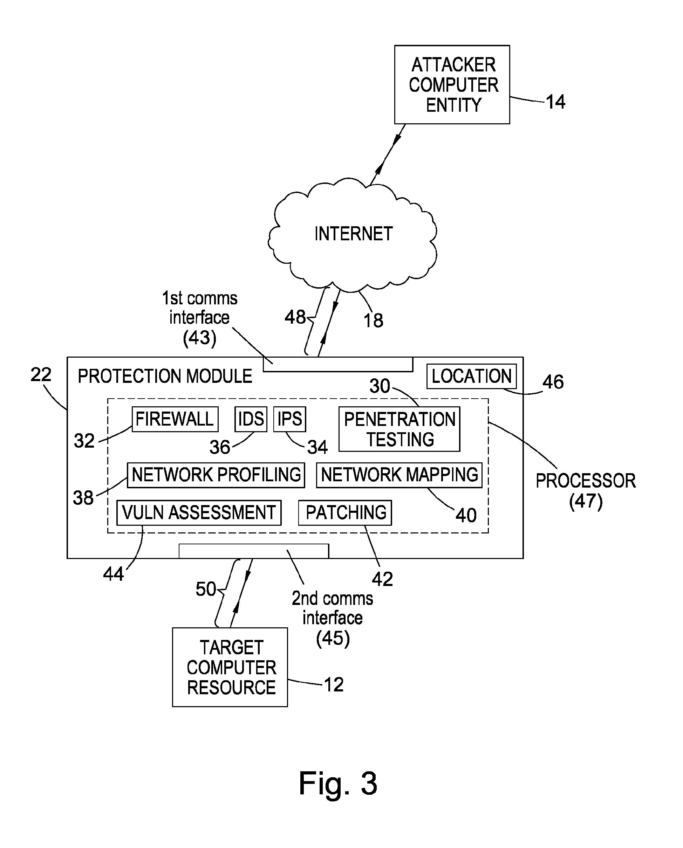

The protection module 22 is located, as shown in Figure 3, between the target computer resource 12 and the communications network 18. In this manner the protection module 22 is arranged to be able to manage data flow into and out of the target computer resource 12.

The protection module 22 comprises a number of cyber defence capabilities. The module may be arranged to profile the target computer resource (e.g. to map the target computer network and the devices installed thereon) and the module may also be arranged to provide an active defence capability as described in more detail below to repel or redirect a cyber-attack that originates from an attacker computer entity.

The protection module comprises a penetration testing device 30 that may be installed at the location of the target computer resource. The protection module incorporates a range of cyber security defences such as a firewall 32, an intrusion prevention system (IPS) 34 and an intrusion defence system (IDS) 36. In accordance with examples useful for understanding the present invention the protection module also comprises active defence capabilities including one or more of: automated network profiling 38, network penetration testing 30, network mapping 40 (including the capability to map the network architecture of the target computer resource and to determine the patch level of the software installed thereon), software patching 42, network vulnerability assessment 44. These various defence capabilities are shown as discrete processors (30, 32, 34, 36, 38, 40, 42, 44) within Figure 3. However, it is to be appreciated that they may be grouped together into fewer or even a single processor 47 within the protection module.

The protection module 22 comprises a first communications interface 43 between the module 22 and the Internet 18 and a second communications interface 45 between the module 22 and the target computer resource 12.

Although the protection module 22 is shown in Figures 2 and 3 to be located at the target location, it may be in communication with cloud based resources that can provide additional functionality or the ability for a remote user (e.g. the payment provider) to exercise command and control functions.

It is noted that locating the protection module 22 at the target computer resource location helps reduce network traffic compared to a protection module that was located "off-site". Additionally locating the module "on site" also reduces the risk that the protection module may be subject to a separate attack such as a man in the middle attack between the target system 12 and the protection module 22.

Since the protection module 22 is arranged to provide a high level of cyber protection it may potentially be the subject of a physical attack such as an attempt to remove or steal it from the target location. To mitigate against this risk the protection module comprises a location determining module 46 that is arranged to check its location periodically and to shut down and/or wipe the protection module 22 if it detects that it has been removed from a particular location.

In the event of a cyber-attack the attacker computer entity 14 would encounter the protection module 22 instead of the target computer resource 12. The firewall 32 and IPS/IDS components (34, 36) would be arranged to undertake one or more of a number of actions, including intercepting the attack, blocking the attack, redirecting the attack (e.g. to the virtual resource module).

The protection module may be arranged to interrupt (sever) the communication link between the target computer resource 12 and the communication network 18. In effect the protection module may be arranged to take the target computer resource offline during an attack. In one variant the protection module may interrupt the communications link between itself and the communications network (i.e. to interrupt link 48) such that both the target computer resource and the protection module are taken offline. In an alternative arrangement the protection module may be arranged to interrupt the communications link between itself and the target computer resource (i.e. interrupt link 50). In this way the protection module may continue to deploy its cyber defences against the attack computer entity and may continue to block or redirect the attack.

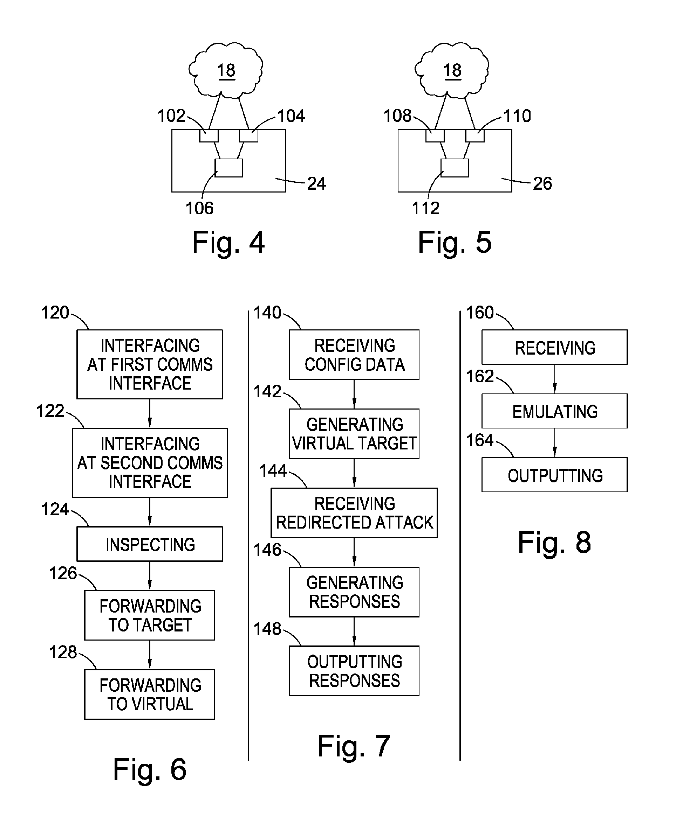

Figure 4 shows a virtual resource module 24 according to an embodiment of the present invention comprising an input 102 and output 104 and a processor 106. The virtual resource module is in communication with the protection module 22 and emulation module 26 via the communication network 18.

Figure 5 shows an emulation module 26 comprising an input 108, an output 110 and a processor 112.

Figure 6 is a flow chart showing the method of operating a computer security protection module 22 according to an example useful for understanding the present invention. In step 120 the protection module 22 interfaces with a communications network 18 using a first communications interface 43.

In step 122 the protection module interfaces with a target computer resource 12 via a second communications interface 45. It is noted that steps 120 and 122 may be carried out in any order or at the same time.

In step 124 a processor 47 within the protection module 22 inspects communications traffic between the communications network and the target computer resource.

In step 126 trusted communications are sent to the target computer resource and in step 128 communications traffic that is not trusted is forwarded to a virtual target 24. It is noted that depending on the type of communications traffic that is received the protection module 18 may, at any one time, be forwarding trusted or untrusted communications traffic. It is also to be noted steps 126 and 128 may occur simultaneously if the protection module is receiving a mixture of trusted and untrusted communications at any one time.

Figure 7 is a flow chart showing the operation of a virtual resource module 24 according to an embodiment of the present invention for emulating a target computer resource 12 to generate a virtual target that substantially mimics the target resource 12. In step 140 configuration data is received from a protection module 22 that is providing cyber defence capabilities to the computer resource 12. In step 142, a processor 106 generates a virtual target that substantially mimics the target resource 12 on the basis of the received data. In step 144 a redirected cyber attack is received from the protection module 18. In step 146 responses to the cyber-attack are generated in the processor 106 and in step 148 the responses are output from the output (104) to the attacker computer entity 14.

Figure 8 is a flow chart showing the process of operating an emulation module, the emulation module 26 being arranged to emulate a target computer resource 12 in order to run mock cyber-attacks against an emulated target computer resource. In step 160 target computer 12 configuration data is received at an input 108 from a protection module 22. In step 162 the processor 112 emulates a representation of the target computer resource 12 and runs mock cyber-attacks. In step 164, updates for the target computer resource 12 are output from an output 110.

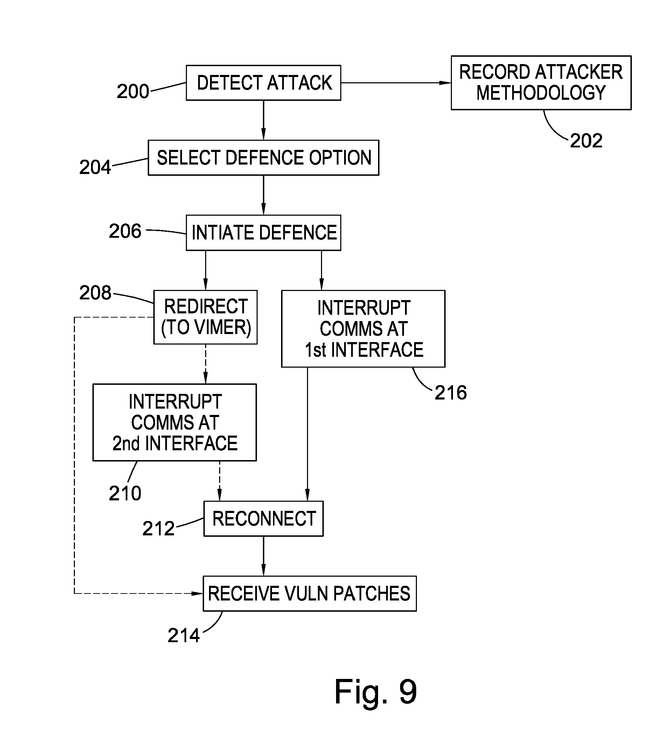

Figure 9 shows a flow chart of the actions taken by the protection module 22 during a cyber-attack.

In step 200, the protection module 22 detects a cyber-attack.

In step 202 the protection module 22 begins recording details of the methodology of the cyber-attack. It is noted that the record of the attack may be stored in a data store associated with the protection module.

In step 204 the protection module 22 is arranged to select one or more defence options (e.g. the IPS/IDS components (34, 36) may be arranged to undertake one or more of a number of actions, including intercepting the attack, blocking the attack, redirecting the attack) and in step 206 the selected defence option(s) is (are) deployed.

In the event that the protection module 22 selects to redirect the cyber-attack then in step 208 the attack may be redirected to the virtual resource module 24.

Optionally in step 210 the protection module may be arranged to interrupt communications at the second communications interface 45 (i.e. the communication link 50 between the protection module 22 and target computer resource 12 may be interrupted). The protection module 22 may be arranged to maintain the selected cyber defence options while the communication link 50 is interrupted.

Once the protection module 22 detects that the cyber-attack is over it reconnects, in step 212, the communications link 50 between the target computer resource 12 and the protection module 22.

As noted above the methodology of the attacker computer entity 14 is recorded in step 102. Recording the type of attack and the mode of attack of the attacking computer entity allows vulnerabilities in the target computer resource 12 to be determined. In step 214 the protection module 22 may receive software patches that address vulnerabilities in the target computer resource 12. These software patches may be received either from the virtual resource module 24, the emulator module 26 or a further source of software patches (not shown in Figure 3).

Depending on the type of cyber-attack being experienced the protection module 22 may in step 216, as an alternative to redirecting the attack (as in step 208), interrupt the communication link 48 at the first communications interface 43.

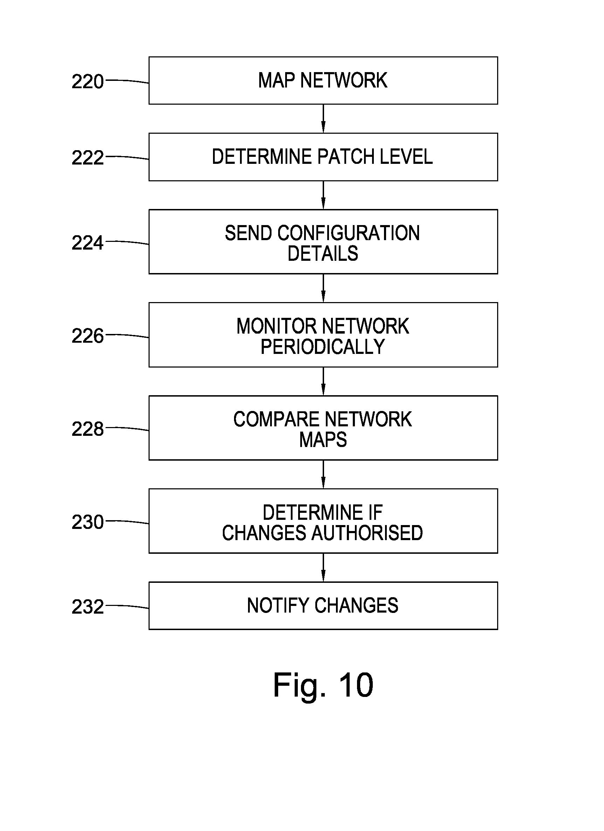

The protection module may also provide preparedness capabilities as shown in Figure 10. These capabilities would be expected to be deployed periodically unless a cyber-attack was detected in accordance with Figure 9.

In step 220 the protection module 22 is arranged to map the computing environment associated with the target computer resource 12. For example, in the event that the target computer resource 12 comprises a plurality of computing devices on a local area network, then the mapping process comprises mapping each device on the network (along with any network components) in order to build a network map.

In step 222 the patch level, i.e. the operating system configuration, of each computing device at the target computer resource 12 is determined (e.g. what operating system is running, what version of a particular operating system is running, what security updates have been installed etc.).

In step 224 the configuration of the target computer resource 12 (e.g. a network map (determined in step 220) and the configuration of network components (determined in step 222)) is sent to the virtual resource module 24 and/or the emulation module 26. Sending this information to the virtual resource module 24 and emulation module 26 allows these modules to provide cyber-defence capabilities that are more closely related to the particular configuration of the target computer resource 12.

In step 226 the protection module 22 periodically monitors the target computer resource 12. The protection module may therefore periodically re-run steps 220 and 222.

In step 228, the network map/configuration details determined in step 226 is compared to an earlier network map/configuration. It is noted that this comparison step may occur on the protection module 22 or, in the event that the protection module sends network/configuration details periodically to the emulation module 26, this comparison step may occur at the emulation module 26.

In step 230, any changes in the network map/configuration of the target computer resource are checked to see if they were authorized. This step may comprise checking an update module at the target computer resource 12 to determine if configuration updates were managed according to a security policy at the target computer resource or if they were ad-hoc changes that were unauthorized/unmonitored.

In step 232 any changes to the configuration of the target computer resource 12 (e.g. new hardware, new installed software, new network components) is notified to a third party monitoring service, to a user associated with the target computer resource or to a security policy monitoring module at the target computer resource.

The protection module 22 may comprise machine learning algorithms and artificial intelligence techniques in order to provide additional cyber defence capabilities that may bridge the gap between current cyber defence systems (e.g. payment card industry data security standards (PCI DSS) in the financial transaction sphere) and the threats provided by advanced persistent treat (APT) entities.

The second main element of the network security system in accordance with embodiments of the present invention is the virtual resource module 24. The virtual resource module 24 is a component (either hardware or software) that is able to emulate a target computer resource 12 in order to generate a virtual target for cyber attackers that is virtually indistinguishable from a genuine target computer resource 12.

The virtual resource module 24 may be located remotely from the target computer resource 12 or maybe located with the protection module 22.

The virtual resource module 24 may be regarded as a system providing decoy targets to "draw the fire" of attacker computer entities.

The virtual resource module 24 may be configured to generate virtual targets in a number of ways. For example, the virtual resource module 24 may receive network details and configuration data from the protection module 22. The virtual resource module 24 may also receive target computer resource configuration data from other sources such as the emulation module 26 described below or PCI DSS components. In a further option the virtual resource module 24 may receive data that is user inputted.

Once the virtual resource module has received suitable target computer resource data it may generate virtual targets for use in a cyber-attack on the target computer resource 12. Virtual targets may be generated automatically using suitable Al or machine learning techniques.

The virtual resource module 24 may conveniently incorporate false or sacrificial data (e.g. payment data) into the representation of the virtual target in order to be able to feed an attacker computer entity with target data. The virtual target may be configured to have an IP address that is similar to the IP address of the target computer resource in order to mitigate the attacker computer entity from determining the target is only virtual.

In some embodiments the virtual resource module 24 may be associated with a database that can supply real CCTV footage or CGI video to give the appearance of a real target entity. In this manner if the attacker computer entity attempts to access CCTV feeds associated with the virtual target then they will be supplied with video footage to maintain the illusion that the virtual target is actually a real target to the attacker computer entity 14.

The virtual resource module 24 may also be arranged to run fake target activities. For example, within the payment processing environment the virtual resource module 24 may run processes that mimic real customer transaction activity and transaction processing using both real (but sacrificial) transaction data and fake transaction data. The virtual resource module 24 may incorporate the credentials of known attacker computer entities into the virtual targets that it creates in order to further redirect cyber-attacks from one attacker computer resource onto other attacker computer resources. As the number of virtual targets generated increases the probability of an attacker computer resource targeting a real target computer resource will decrease and consequently the chances of exfiltrating exploitable data from them will also be reduced to a low level of probability.

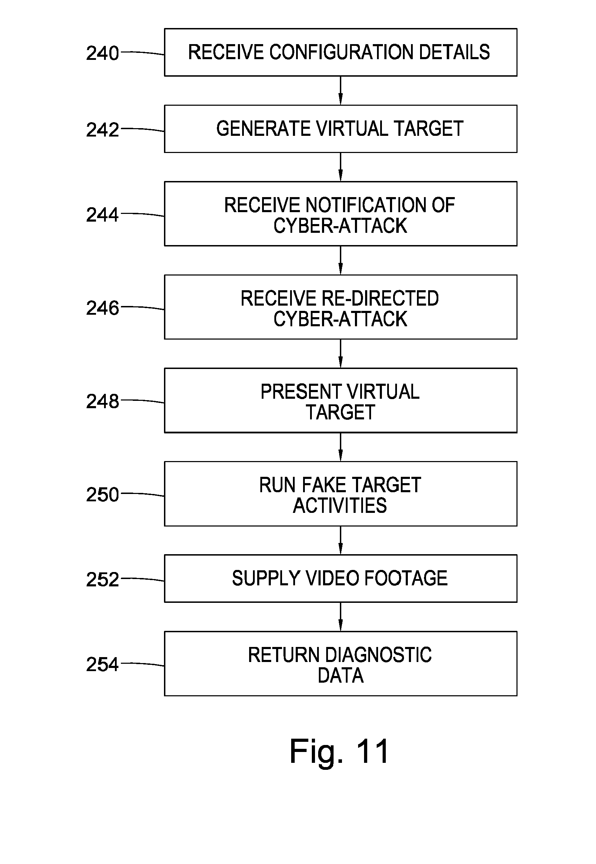

An exemplary mode of operation of a virtual resource module 24 in accordance with embodiments of the present invention is shown in relation to Figure 11.

In step 240, the configuration of the target computer resource 12 (determined in step 224 above) is received by the virtual resource module 24.

Based on the received configuration data the virtual resource module 24 is arranged, in step 242, to generate a virtual target.

In step 244, the virtual resource module 24 receives notification of a cyber-attack on the target computer resource 12 and in step 246, the virtual resource module 24 receives the redirected cyber-attack from the attacker computer entity 14.

In step 248, the virtual target generated in step 242 is presented to the attacker computer entity 14.

In step 250, the virtual resource module 24 runs fake activities on the virtual target. For example, the virtual target represents a representation of the actual target computer resource 12 and as such may support fake or dummy activities in order to look more "authentic" to the attacking entity 14. In the example of a financial system the virtual target may be arranged to transmit/receive financial data to make it appear that financial transactions are taking place.

In step 252, video footage (either computer generated imagery or previously recorded imagery) may be supplied to the virtual target for capture by the attacker computer entity 14.

In step 254, diagnostic data captured by the virtual resource module 24 during the cyber-attack is fed back to the protection module 22 and/or the emulation module 26 in order to strengthen cyber-defence capabilities.

The third main element of the network security system is the emulation module 26 which may be thought of as a target "cyber range" comprising a plurality of virtual machines together with other network hardware that is configured to emulate a target computer resource 12 configuration such that various cyber-attack scenarios can be run in order to test the resilience of the defences in place.

During a cyber-attack test the emulation module 26 would store extensive activity logs that could be subsequently analysed to determine if the target computer resource 12 may be hardened in any way against future (real) attacks.

The emulation module 26 may be configured based on the target's assessment of their own computer or computer network configuration. This configuration may be compared to the configuration and associated analytics generated by the protection module 22 to highlight failures in the target's own understanding of their computer/computer network configuration. As noted in relation to Figure 5 above the target's assessment of their own computer resource may be compared against that of the protection module 22 in order to flag differences between the two assessments and to potentially detect unauthorized changes to the system.

An overview of the operation of a network security system in accordance with an embodiment of the present invention is now described in relation to Figure 2 and is also compared to known cyber-attack scenarios.
1) In a traditional attack, the hacker (attacker computer entity 14) would attempt to connect to the target computer resource 12 via communication paths 60 and 62 (it is noted that in a prior art system there may be a firewall device in the location of the protection module 22 in Figure 2). However, in a network security system 20, the protection module 22 is interposed in the communication path into/out of the target computer resource in order to intercept, monitor and deflect attacks.
2) If virtual targets are present in known arrangements then they rely on being discovered independently by the attacker computer entity via the communication path 64. Once located however the hacker may progress an attack in the same way as for real targets, the difference being that they don't interfere with real target activity or get authentic payment data.
3) In the network security system 20, the protection module 22 is arranged to forward genuine traffic to the target computer resource 12 via communication path 62. It is noted that such genuine traffic has no impediment on data throughput and imposes no impediment on data throughput. The protection module 22 is also arranged to use communication path 62 for its own network profiling and penetration testing activities which may be structured to occur at times of least impact to the network.
4) The protection module 22 may be arranged to instruct the virtual resource module 24 to mimic a specific target under attack and, possibly after allowing the attacker computer entity 14 to get a taste of what is on offer, redirect the attacker to the virtual target hosted on the virtual resource module 24 in order to control the attacking entity 14 while supplying either fake or sacrificial data.
5) A trusted third party 16 may operate a command and control link 66 to the protection module 22 in order to update the module and carry out maintenance and download diagnostic information and analytics. High security and integrity would be paramount in this link. In the example of a financial processing environment, the third party 16 may be a payment provider and the communications link may be achieved via different communication channels to the normal merchant data and using proprietary payment provider protocols or a communications system designed to make networks invisible to unauthorized users and to protect data being transmitted across the network (such as Unisys Stealth^{™}).
6) A trusted third party 16 may also operate a command and control communications link 68 to the virtual resource module 24. Once again high security and integrity would be paramount in this link. In the example of a financial processing environment, the third party 16 may be a payment provider and the communications link may be achieved via different communication channels to the normal merchant data and using proprietary payment provider protocols or a communications system designed to make networks invisible to unauthorized users and to protect data being transmitted across the network (such as Unisys Stealth^{™}).
7) The emulation module 26 may receive a complete and accurate description of the target network to be emulated. This data is passed and updated via communications link 70 and the results of the emulation runs are passed back to the target 12 for remediation.
8) The protection module 22 may generate its own 'view' of how the target's network is configured (via its own penetration testing) and this view of the network can be sent via communications link 72 to the emulation module 26 in order to run alternate attack simulations or for comparison to the target's own description and understanding.
9) A trusted third party 16 may also operate a command and control communications link 74 to the emulation module. Once again high security and integrity would be paramount in this link. In the example of a financial processing environment, the third party 16 may be a payment provider and the communications link may be achieved via different communication channels to the normal merchant data and using proprietary payment provider protocols or a communications system designed to make networks invisible to unauthorized users and to protect data being transmitted across the network (such as Unisys Stealth^{™}).
10) The virtual resource module 24 may use real architectural features derived from the protection module and the target's own descriptions of their computer/computer network configuration in order to create realistic targets for attack. The use of real architectural features reduces the risk of hackers spotting virtual targets.
11) In the network security system 20, the protection module 22 is in communication with the virtual resource module 24 via communication link 76 (e.g. in order to send data in accordance with steps 124, 140, 144, 146, 154 etc.). The virtual resource module 24 is also in communication with the emulation module 26 via communication link 78 (e.g. to receive data in accordance with at least step 154).

As the person skilled in the art will appreciate, modifications and variations to the above embodiments and examples may be provided, and further embodiments may be developed, without departing from the spirit and scope of the invention. Reference to standards and proprietary technologies are provided for the purpose of describing effective implementations, and do not limit the scope of the invention.

## Claims

1. A virtual resource module (24) for emulating a target computer resource (12) in the event of a cyber-attack, the virtual resource module comprising;
an input for receiving target computer resource configuration data from a computer security protection module (22) providing cyber defence capabilities to the computer resource (12);
a processor arranged to generate a virtual target to substantially mimic the target computer resource on the basis of the received configuration data;
an output arranged to output data to an attacker computer entity (14);
wherein the input is arranged to receive a redirected cyber-attack originating from the attacker computer entity, the attack being redirected from the computer security protection module (22);
and the processor is arranged to generate responses to the cyber-attack, the responses being sent to the attacker computer entity from the output.

2. A virtual resource module as claimed in Claim 1, wherein the processor is arranged to store event logs relating to cyber-attack for subsequent analysis.

3. A virtual resource module as claimed in Claim 2, wherein the processor is arranged to store event logs in a data store associated with the virtual resource module.

4. A virtual resource module as claimed in any one of Claims 1 to 3, wherein the processor is arranged to supply video footage representing a physical location from the output to the attacker computer entity.

5. A virtual resource module as claimed in Claim 4, wherein the processor is arranged to output the video footage from the output to the attacker computer entity (14) in response to a request for footage from the attacker computer entity.

6. A virtual resource module as claimed in any one of Claims 1 to 5, wherein the processor is arranged to identify further known attacker computer entities and to redirect the incoming cyber-attack received at the input to a known attacker computer entity via the output.

7. A virtual resource module as claimed in any one of Claims 1 to 6, wherein the processor is arranged to supply an Internet Protocol (IP) address to the virtual target that is substantially the same as the target computing device (12).

8. A virtual resource module as claimed in any one of Claims 1 to 7, wherein the processor is arranged to generate a plurality of virtual targets and to populate the internet with the plurality of virtual targets in advance of potential cyber-attacks.

9. A method of operating a virtual resource module (24) for emulating a target computer resource (12) in the event of a cyber-attack from an attacker computer entity, the method of operating the virtual resource module comprising;
receiving (140), at an input 102, target computer resource configuration data from a computer security protection module (22) providing cyber defence capabilities to the computer resource (12);
generating (142), at a processor 106, a virtual target to substantially mimic the target computer resource (12) on the basis of the received configuration data;
receiving (144), at the input, a redirected cyber-attack originating from the attacker computer entity (14), the attack being redirected from the computer security protection module;
generating (146), at the processor, responses to the cyber-attack,
outputting (148), from an output, the responses to the attacker computer entity.

10. A carrier medium for carrying a computer readable code for controlling a computing device to carry out the method of Claim 9.

11. A non-transitory computer-readable storage medium storing executable computer program instructions implementing Claim 9.
